# EUROPÄISCHE PATENTSCHRIFT

(11) **EP 1 446 265 B1**
(45) Veröffentlichungstag und Bekanntmachung des Hinweises auf die Patenterteilung: **07.09.2005**
(21) Anmeldenummer: 02779383.5
(22) Anmeldetag: 20.09.2002
(51) Int. Cl.: B25B 27/00, F16D 13/68, F16D 55/36

(54) **MONTIERBARE LAMELLENPAKETEINHEIT UND VERFAHREN ZUR MONTAGE**
DISC-PACKET UNIT THAT CAN BE MOUNTED AND METHOD FOR MOUNTING THE SAME
UNITE PAQUET DE LAMELLES A MONTER ET PROCEDE DE MONTAGE ASSOCIE

(30) Priorität: 02.10.2001 DE 10148776
(43) Veröffentlichungstag der Anmeldung: 18.08.2004
(73) Patentinhaber: Voith Turbo GmbH & Co. KG, 89522 Heidenheim (DE); Miba Frictec GmbH, 4655 Vorchdorf (AT)
(72) Erfinder: HÖRTENHUBER, Alfred, 4651 Stadl-Paura (AT); MEIER-BURKAMP, Gerhard, 89522 Heidenheim (DE); KÖRNER, Alexander, 89555 Steinheim (DE)
(74) Vertreter: Dr. Weitzel & Partner
(86) Internationale Anmeldenummer: PCT/EP2002/010558
(87) Internationale Veröffentlichungsnummer: WO 2003/031123

(56) Entgegenhaltungen:
- DE-C- 19 855 759
- US-A- 3 335 834

## Beschreibung

Die Erfindung betrifft eine Lamellenpaketeinheit zum Einbau als Lamellenkupplung oder Lamellenbremse in einer Getriebebaueinheit; ferner ein Verfahren zur Montage einer Lamellenpaketeinheit.

Aus der Druckschrift DE 198 55 759 C1 ist eine Getriebebaueinheit mit einem Getriebegehäuse bekannt. Um den wirksamen Durchmesser der inneren Getriebeelemente größer zu gestalten sowie eine einfache Montage und Austauschbarkeit der einzelnen Getriebeelemente, beispielsweise Kupplungseinrichtungen und Planetenradsätze, zu gewährleisten, sind wenigstens zwei stabförmige Führungselemente, welche sich in axialer Richtung betrachtet über wenigstens einen Teil der axialen Erstreckung des zylindrischen Innenraumes erstrecken, vorgesehen, an denen eine Vielzahl von Getriebeelementen ortsfest gegenüber dem Gehäuse lagerbar sind. Die stabförmigen Führungselemente sind im zylindrischen Innenraum außerhalb eines Bereiches der in Einbaulage in Höhenrichtung größten Abmessung des zylindrischen Innenraums angeordnet und werden in Ausnehmungen im Getriebegehäuse, welche mit dem Innenraum verbunden sind, angeordnet. Bei dieser Ausführung ist es erforderlich, jedes Einzelelement eines einzelnen Getriebeelementes - beispielsweise einer Lamellenbremseinrichtung - nacheinander auf das Führungselement aufzubringen. Dabei ist jedoch zu berücksichtigen, daß beim Aufziehen von Außenlamellen auf die stabförmigen Führungselemente gleichfalls die Innenlamellen, beispielsweise auf ein Hohlrad oder eine Profilwelle, im Wechsel aufgezogen werden müssen. Die Montage erfolgt hier als Einzelmontage der Einzelelemente, welche ohne spezielle Vorrichtung sehr aufwendig ist. Anderseits bedeutet jedoch die Verwendung einer Vorrichtung, daß diese erst einmal speziell für den gewünschten Einbaufall konstruiert, ausgelegt und hergestellt werden muß, was insbesondere bei einer Vielzahl von zu montierenden Lamelleneinheiten unterschiedlicher Abmessungen eine Vielzahl von Vorrichtungen voraussetzt, welche auch nicht universell einsetzbar sind. Eine weitere Problematik besteht in der Auswechselbarkeit defekter Verschleißteile, insbesondere wenn diese nach einem bestimmten Betriebszyklus ausgetauscht werden müssen, was eine fast vollständige Demontage aller einzelnen auf die stabförmigen Führungselemente aufgefädelten Elemente erfordert. Der Montage und Demontageaufwand ist bei dieser Ausführung somit besonders hoch. Auch erfordern diese Handlungen eine besonders sorgsame Arbeitsweise, um ein Durcheinandergeraten oder eine fehlerhafte Zusammenführung der Teile zu verhindern, da vergessene oder überzählige Teile Fehlfunktionen der gesamten Einheit - Bremseinrichtung oder Kupplung - bedingen kann.

Aus der Druckschrift DE 36 09 376 A1 ist ein Verfahren zum Einsetzen eines Lamellenpaketes in ein Kupplungsgehäuse einer Flüssigkeitsreibungskupplung vorbekannt, bei welchem Montagebolzen verwendet werden, über die sich die Lamellen zentriert einsetzen lassen. Die Montagebolzen sind dabei Bestandteil einer Handhabungsvorrichtung, mittels welcher die Kupplungslamellen in das Kupplungsgehäuse eingeführt werden. Nach dem Einsatz wird die Handhabungsvorrichtung zusammen mit dem Montagebolzen aus dem Kupplungsgehäuse und dem eingesetzten Lamellenpaket herausgezogen. Die Führung der Lamellen erfolgt dabei im Kupplungsgehäuse über entsprechende in der Gehäuseinnenwand vorgesehene Profilierungen. Bei dieser Lösung sind die Lamellen zum einen lose auf dem Montagebolzen geführt, wobei die Handhabungsvorrichtung speziell für den gewünschten Einsatzfall konstruiert, ausgelegt und hergestellt werden muss. Ferner ist die Handhabungsvorrichtung auch an die Lamellen anzupassen. Zwar kann mit dieser Lösung eine Fixierung der Lage der einzelnen Lamellen zueinander in radialer Richtung vorgenommen werden, allerdings ist insbesondere zur Demontage des gesamten Lamellenpaketes beziehungsweise der vollständigen Kupplung ein aufwendiges Auffädeln der einzelnen Lamellen erforderlich.

Aus der Druckschrift DE-US 39 16 726 ist eine Reibungskupplungseinheit vorbekannt, bestehend aus einer Kupplung und einer Kupplungsscheibe, wobei die Kupplung eine am Deckel abgestützte, eine Druckplatte in Richtung auf eine Gegendruckplatte - wie ein Schwungrad - belastende Federeinrichtung, wie eine am Deckel schwenkbar gelagerte Tellerfeder besitzt und bei der im an der Gegendruckplatte montierten Zustand der Einheit die Kupplungsscheibe zwischen Druckplatte und Gegendruckplatte einklemmbar ist. Die Kupplung und die Kupplungsscheibe werden dabei vor der Montage auf die Gegendruckplatte mittels eines Montagehilfswerkzeuges zu einer Baueinheit und gemeinsam auf die Gegendruckplatte montiert. Bei dieser Lösung kann zwar die Kupplung und die Kupplungsscheibe bereits beim Kupplungshersteller zu einer Einheit zusammengefügt werden und in dieser Form als eigenständig handelbare Einheit gehandhabt werden. Jedoch ist es auch hier erforderlich, dass das Montagehilfswerkzeug speziell für den konkreten Einsatzfall ausgelegt ist. Ferner ist diese Ausführung lediglich zur Befestigung einer Kupplungsscheibe an einer Kupplung und nicht für ein Lamellenpaket geeignet.

Ein vormontiertes Lamellenpaket ist ferner aus der Druckschrift DE 39 27 584 C1 vorbekannt. Bei dieser Lösung werden die auf Distanz zueinander gehaltenen Lamellen über Distanzstreifen festgelegt. Die Distanzstreifen erstrecken sich dabei über die gesamte axiale Länge der zu distanzierenden Lamellen eines Lamellenpaketes. Durch diese Lösung kann auf umlaufende Distanzringe verzichtet werden. Allerdings bedarf es auch hierzu auch einer separaten Vorrichtung, um die Distanzstreifen am Außen- oder Innenumfang der Lamellen zu positionieren und ferner die einzelnen Lamellen auf diese aufzustecken. Der Einbau pro Lamelle erfolgt dabei in fest vorgegebenen Positionen und die Distanzstreifen dienen zur axialen Lagefixierung der einzelnen Lamellen. Dabei bedarf es zum einen einer speziellen Gestaltung der Lamellen um im Zusammenwirken mit den Distanzierungsmitteln den entsprechenden Effekt zu erzielen beziehungsweise einer Montagehüfsvorrichtung, um die einzelnen Lamellen in radialer Richtung hinsichtlich ihrer Lage zueinander zu fixieren und die Distanzierungsmittel anzuordnen. Für Ausführungen mit im Einbauzustand axial verschiebbaren Lamellen ist diese Möglichkeit ebenfalls nicht geeignet.

Der Erfindung liegt daher die Aufgabe zugrunde, ein Verfahren und eine Vorrichtung zur Montage zu schaffen, welche die lästige Einzelmontage der einzelnen Elemente bei der Komplettmontage des Gesamtgetriebes ersetzt und auch bei Defekt an beliebiger Stelle in einer Getriebebaueinheit eine leichte Austauschbarkeit einer Kupplungs- oder Bremseinrichtung ermöglicht.

Die erfindungsgemäße Lösung wird durch die Merkmale der Ansprüche 1, 22, 23, 24 und 25 charakterisiert. Vorteilhafte Ausgestaltungen sind in den Unteransprüchen wiedergegeben.

Erfindungsgemäß ist es vorgesehen, die Montage einer Lamellenbrems-oder Kupplungseinrichtung als komplett montierte Lamellenpaketeinheit vorzunehmen. Diese umfaßt ein vorspannbares Lamellenpaket, welchem eine Montagehilfsvorrichtung zur Montage in der Getriebebaueinheit auf einem Führungselement, beispielsweise in Form von Stangen oder Rohren, zugeordnet ist und welches in der montierbaren Lamellenpaketeinheit als vorgespanntes Lamellenpaket vorliegt. Das vorspannbare und in der montierbaren Lamellenpakteinheit vorgespannte Lamellenpaket umfaßt wenigstens zwei einander benachbart angeordnete und reibflächenbildende Elemente, welche über ein reibflächenbildendes Zwischenelement reibschlüssig miteinander koppelbar sind. Bei einer Vielzahl von reibflächenbildenden Elementen ist wenigstens zwischen zwei einander benachbart angeordneten reibflächenbildenden Elementen eine Federeinrichtung vorgesehen. Die reibflächenbildenden Zwischenelemente sind in der montierbaren Lamellenpaketeinheit frei von einer Führung. Die Montagehilfsvorrichtung umfaßt wenigstens ein Hülsenelement zur Führung der reibflächenbildenden Elemente und der zwischen diesen angeordneten Federeinrichtungen. Die reibflächenbildenden Elemente umfassen dazu je nach Anzahl der verwendeten Hülsenelemente eine einem Hülsenelement zugeordnete Durchgangsöffnung. Der Hülse ist im Bereich eines Endes ein Anschlag zugeordnet. Die Montagehilfsvorrichtung umfaßt ferner wenigstens eine mit einem Hülsenelement lösbar verbindbare Spannvorrichtung zur Erzeugung der Vorspannung des Lamellenpaketes. Zu diesem Zweck wird das gesamte Lamellenpaket gegenüber dem Anschlag unter Krafteinwirkung verschoben bzw. zusammengedrückt. Die Größe der Vorspannung ist dabei derart bemessen, daß zwischen den Zwischenelementen und reibflächenbildenden Elementen Haftreibung entsteht. Dies bedeutet, daß die Zwischenelemente zwischen den reibflächenbildenden Elementen quasi eingeklemmt werden. Eine spezielle Führung für die Zwischenelemente bei Händelung der Lamellenpaketeinheit kann dann entfallen. Die erfindungsgemäße Lösung bietet den Vorteil, daß das gesamte Lamellenpaket komplett vormontiert - sowohl Außen- als auch Innenlamellen - in Form der montierbaren Lamellenpaketeinheit mit dem Hülsenelement auf eine oben beschriebene Stangenaufhängung auf- und auch wieder abziehbar ist. Die Innenkontur des Hülsenelementes muß dabei lediglich der Außenkontur des Führungselementes entsprechen. Vorzugsweise sind beide mit kreisrundem Querschnitt ausgeführt und zwischen Außenumfang des Führungselementes und dem Innenumfang des Hülsenelementes ist zumindest eine Spielpassung oder überhaupt keine vorgesehen. Wesentlich ist, daß die Hülse leicht auf das stabförmige Führungselement aufgezogen werden kann.

Unter dem Begriff "reibflächenbildend" wird dabei verstanden, daß zum einen die Stirnflächen der Elemente wenigstens teilweise die zur Realisierung eines Reibschlusses erforderlichen Bereiche aufweisen, welche an der Reibpaarung beteiligt sind. Dabei wird die Reibfläche entweder direkt von der Stirnseite des Elementes oder Zwischenelementes gebildet oder aber von einem auf die Stirnseiten dieser Elemente aufgetragenen und sich über wenigstens einen Teil der Stirnfläche erstreckenden Reibbelag.

Bei Vorsehen mehrerer Hülsen sind die an den reibflächenbildenden Elementen zur Führung vorgesehenen Durchgangsöffnungen vorzugsweise auf einem gemeinsamen Durchmesser angeordnet. Diese können - je nach Anordnung der Führungselemente in der Getriebebaueinheit in gleichmäßigem Abstand in Umfangsrichtung oder ungleichmäßigem Abstand angeordnet werden. Denkbar ist jedoch auch eine Ausführung mit Anordnung der Durchgangsöffnungen auf unterschiedlichen Durchmessern.

Die Anzahl der Hülsenelemente mit Spannvorrichtung kann bezogen auf die Anzahl der Führungselemente auf ein Minimum beschränkt werden. Erforderlich für eine optimale Klemmung sind wenigstens zwei, welche in Umfangsrichtung wenigstens um einen Winkel von größer 90 ° versetzt zueinander sind, vorzugsweise um einen Winkel von ca. 180°.

Die Montage der montierten Lamellenpaketeinheit erfolgt als komplettes Paket im vorgespannten Zustand der Lamellen d. h. mitsamt der Montagehilfsvorrichtung. Für die Getriebebaueinheit bedeutet dies, daß lediglich das Führungselement und das für die Zwischenelemente erforderliche Führungselement, beispielsweise in Form eines Hohlrades oder einer Profilwelle oder bei Ausführung der Zwischenelemente als Außenlamellen, ein entsprechend gestaltetes Innenzahnhohlrad, vorzusehen sind. Das vorgespannte Lamellenpaket wird mitsamt der Hülse auf das Führungselement aufgeschoben und nach Fixierung die Spannvorrichtung gelöst. Dabei wird das vorgespannte Lamellenpaket gelöst und die Lamellen nehmen eine Position entsprechend des unbelasteten Zustandes ein. Das Hülsenelement ist dann lediglich noch in axialer Richtung zu fixieren bzw. die vom Anschlagelement am weitesten entfernteste Lamelle ist in axialer Richtung zu sichern, wobei diese Sicherung vorzugsweise derart gestaltet ist, daß diese gleichzeitig auch die Sicherung des gesamten Lamellenpaketes in dieser Richtung gegenüber der Hülse ermöglicht. Die Spannvorrichtung kann vollständig entfernt werden oder aber wird derart betätigt, dass die Vorspannung aufgehoben wird.

Die Lamellenpaketeinheit eignet sich sowohl zur Anwendung in Lamellenkupplungen als auch Lamellenbremseinrichtungen, wobei letztere das bevorzugte Anwendungsgebiet darstellen. Dabei wird dann das Hülsenelement entweder auf ein ortsfest gelagertes Führungselement, beispielsweise eine im Gehäuse gelagerte Stange, aufgezogen, während bei Ausführungen für Kupplungseinrichtungen das Führungselement immer drehfest mit einem rotierenden Bauelement gekoppelt ist.

Die reibflächenbildenden Elemente sind dabei vorzugsweise als Außenlamellen ausgeführt. In diesem Fall werden die Zwischenelemente von Innenlamellen gebildet, welche im Bereich ihres Innendurchmessers Mittel zur Realisierung einer formschlüssigen Verbindung mit einem weiteren Führungselement im Getriebe aufweisen, wobei dieses Führungselement beispielsweise von einer profilierten Welle oder einem Hohlrad gebildet wird. An die Ausführung der Außenlamellen sind dabei keine besonderen Anforderungen zu stellen.

Eine weitere Möglichkeit besteht darin, die reibflächenbildenden Elemente als Innenlamellen auszuführen. In diesem Fall werden die Außenlamellen von den reibflächenbildenden Zwischenelementen gebildet. Die Innenlamellen sind dabei auf dem Hülsenelement geführt, während die Außenlamellen bei Montage zwischen die Innenlamellen geklemmt werden. Die Führung der Außenlamellen erfolgt im Getriebe an einem Führungselement, beispielsweise der Gehäuseinnenkontur einer Getriebebaueinheit durch die entsprechend komplementäre Ausgestaltung der Außenlamellen am Außendurchmesser. Vorzugsweise weisen diese Vorsprünge und Ausnehmungen auf, die in entsprechend dazu komplementär ausgestaltete und sich in axialer Richtung über die Getriebelänge erstreckende Ausnehmungen und Vorsprünge an der Innenkontur des Gehäuses eingreifen.

Die erfindungsgemäße Lösung bietet den Vorteil, daß die reibflächenbildenden Elemente hinsichtlich ihrer Lage koaxial zum Hülsenelement angeordnet und in radialer Richtung justiert sind. Dies gilt auch für die Zwischenelemente. Bei Vorsehen lediglich eines Hülsenelementes sollte zwischen den reibflächenbildenden Elementen und der Außenkontur des Hülsenelementes eine Spielpassung bestehen, bei Vorsehen mehrerer Hülsenelemente genügt die Ausführung der Durchgangsöffnungen an den reibflächenbildenden Elementen mit einem größeren Durchmesser als der Außendurchmesser des Hülsenelementes. Zur Vormontage der Lamellenpaketeinheit kann jedoch zusätzlich noch eine Hilfsvorrichtung vorgesehen werden, welche die Zwischenelemente hinsichtlich ihrer Lage in radialer Richtung gegenüber den Hülsenelementen bzw. den reibflächenbildenden Elementen justiert. Diese Hilfsvorrichtung wird entweder von einem zylindrischen Element mit entsprechender Ausgestaltung am Innendurchmesser gebildet, welches für die Zwischenelemente bei Ausführung als Außenlamellen die Lage dieser in radialer Richtung gegenüber den auf Hülsenelementen geführten reibflächenbildenden Elementen fixiert, während bei Ausführung der Zwischenelemente als Innenlamellen das zylindrische Element mit seinem Außendurchmesser die Lage der Innenlamellen bezogen auf deren Innendurchmesser in radialer Richtung gegenüber den als Außenlamellen ausgeführten reibflächenbildenden Elementen und dem Hülsenelement fixiert.

Ein wesentlicher Vorteil der erfindungsgemäßen Lösung besteht des weiteren darin, daß die axiale Baulänge in Toleranz gehalten werden kann, d. h., das Lamellenpaket kann bereits bezüglich der axialen Toleranzen der Getriebebaueinheit vorkonfektioniert werden.

Unter einem weiteren Aspekt der Erfindung kann das Hülsenelement oberflächenbehandelt werden, vorzugsweise wird dieses gehärtet. Dies ermöglicht es, Einschläge der reibflächenbildenden Elemente zu vermeiden und gleichzeitig auf aufwendige Oberflächenbehandlungen und teure Materialien für die stab - oder stangenförmigen Führungselemente in einer Getriebebaueinheit zu verzichten.

Ein weiterer wesentlicher Vorteil der erfindungsgemäßen Lösung besteht darin, daß auch beim erforderlichen Austausch komplett vorjustierte Lamellenpakete geliefert werden können, die auf relativ einfache Art und Weise im Getriebe untergebracht werden können. Sind alle, den drehzahl-/drehmomentwandelnden Elementen zugeordneten Lamellenkupplungs- und/oder Bremseinrichtungen aus montierten Lamellenpaketeinheiten zusammengestellt, kann beim Austausch eines bestimmten Paketes bei Führung aller Getriebeelemente an Führungselementen jedes einzelne, insbesondere auch weiterverwendbare Lamellenpaket für sich vorgespannt werden und als Gesamteinheit aus dem Getriebe herausgenommen werden. Der Austausch des defekten Elementes kann dabei durch den Austausch des kompletten Lamellenpaketes erfolgen.

Die Spannvorrichtung kann unterschiedlich ausgeführt sein. Diese kann ein lösbar mit dem Hülsenelement verbindbares Abstützelement, ein Einstellelement und eine Kraftaufbringungseinrichtung, welche wenigstens mittelbar an dem äußersten und am weitesten vom Anschlag entfernt angeordneten reibflächenbildenden Element des Lamellenpaketes in Wirkverbindung bringbar ist, umfassen. Dabei werden vorzugsweise Einstellelement und Kraftaufbringungseinrichtung von einem Element gebildet. Die Kraftaufbringungseinrichtung umfaßt beispielsweise eine nach außen wirkende Tellerfeder, dem eine Einstelleinrichtung zugeordnet ist oder eine Stellmutter, welche mit einem, auf dem Hülsenelement angeordneten Gewinde zusammenwirkt, wobei diese gleichzeitig auch das Einstellelement bilden kann. Eine weitere Möglichkeit besteht in der Verwendung eines Spann- bzw. Klemmringes.

Die erfindungsgemäße Lösung wird nachfolgend anhand von Figuren erläutert. Darin ist im einzelnen folgendes dargestellt:
- Figuren 1a und 1b: verdeutlichen in schematisch vereinfachter Darstellung anhand zweier Ansichten eine Ausführung einer erfindungsgemäß montierten Lamellenpaketeinheit;
- Figur 2: verdeutlicht eine alternative Ausgestaltung zu Figur 1 mit Ausbildung der reibflächenbildenden Elemente als Innenlamellen;
- Figur 3: verdeutlicht die Einbausituation und das Verfahren zur Montage einer erfindungsgemäß gestalteten Lamellenpaketeinheit;
- Figur 4: verdeutlicht die Lamellenpaketeinheit im montierten Zustand.

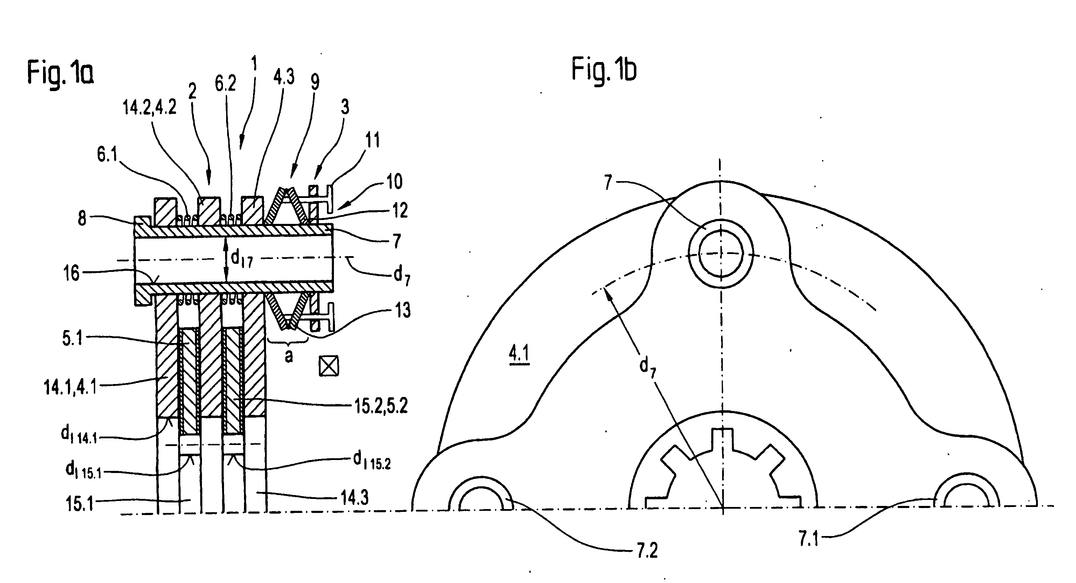

Die Figur 1 verdeutlicht in schematisch vereinfachter Darstellung in einem Axialschnitt eine Ausführung einer erfindungsgemäß gestalteten montierbaren Lamellenpaketeinheit 1, umfassend ein vorgespanntes

Lamellenpaket 2 und eine Montagehilfsvorrichtung 3. Das vorgespannte Lamellenpaket 2 umfaßt wenigstens zwei einander benachbart angeordnete reibflächenbildende Elemente, hier 4.1 bis 4.3, welche über ein reibflächenbildendes Zwischenelement 5 reibschlüssig miteinander koppelbar sind. Bei einer Ausführung mit einer Mehrzahl reibflächenbildender Elemente, wie hier 4.1 bis 4.3, ist wenigstens zwischen zwei der einander benachbart angeordneten reibflächenbildenden Elemente, hier zwischen allen einander benachbart angeordneten reibflächenbildenden Elementen 4.1 bis 4.3, eine Federeinrichtung, hier 6.1 und 6.2, angeordnet. Die Montagehilfsvorrichtung 3 umfaßt ein Hülsenelement 7 zur Führung der reibflächenbildenden Elemente 4.1 bis 4.3 und der dazwischen angeordneten Federeinrichtungen, hier der Federeinrichtungen 6.1 und 6.2. Dem Hülsenelement 7 ist ferner ein Anschlagselement 8 zugeordnet, welches vorzugsweise, wie in der Figur 1 im Schnitt dargestellt, einteilig mit dem Hülsenelement 7 ausgeführt ist. Denkbar ist jedoch auch eine Ausbildung als separates scheibenförmiges Element, welches fest mit dem Hülsenelement 7 verbunden wird oder derart mit dieser verspannt, daß eine Fixierung in axialer Richtung gegeben ist. Das Anschlagelement 8 bzw. der im Hülsenelement 7 ausgebildete Anschlag dient der Abstützung des vorgespannten Lamellenpaketes 2. Zur Realisierung der Vorspannung ist ferner eine Spannvorrichtung 9 vorgesehen, welche am Hülsenelement 7 geführt ist, vorzugsweise koaxial zu diesem angeordnet ist und an dem reibflächenbildenden Element, hier dem reibflächenbildenden Element 4.3, wirksam wird, welches am weitesten vom Anschlag des Elements 8 entfernt auf dem Hülsenelement 7 geführt ist. Im einfachsten Fall umfaßt die Spannvorrichtung 9 ein lösbar mit dem Hülsenelement 7 verbundenes Abstützelement 10 und ein, sich am Abstützelement 10 abstützendes Einstellelement 11, welches am äußeren am weitesten vom Anschlagelement 8 angeordneten reibflächenbildenden Element 4.3 wirksam wird, und eine Kraftaufbringungseinrichtung 12, welche am Einstellelement 11 wirksam wird.

Das Einstellelement 11 stützt sich dabei über die Kraftaufbringungseinrichtung 12 am Abstützelement 10 ab. Das Abstützelement 10 bleibt gegenüber dem Hülsenelement 7 ortsfest, während das Einstellelement 11 seine Lage unter Einwirkung der Kraftaufbringungseinrichtung 12 verändern kann. Die Spannvorrichtung 9 umfaßt wenigstens zwei Spannzustände - einen ersten Zustand, der gelöste Zustand und einen zweiten, in der Figur 1 dargestellten, welcher der Vorspannung des Lamellenpaketes 2 dient. Als Kraftaufbringungseinrichtung 12 wird hier eine Tellerfeder 13 verwendet, die sich an einem ortsfest mit dem Hülsenelement 7 koppelbaren Abstützelement 10 abstützt. Das Einstellelement 11 dient der Einstellung des Federweges a. Die Spannvorrichtung 9 ist dabei lösbar mit dem Hülsenelement 7 verbindbar, wobei die Verbindung über die Verbindung des Abstützelementes 10 mit dem Hülsenelement 7 erfolgt.

Bei der in der Figur 1 dargestellten Ausführung handelt es sich bei den reibflächenbildenden Elementen 4.1 bis 4.3 des vorgespannten Lamellenpaketes 2 um Außenlamellen 14.1 bis 14.3. Deren Innendurchmesser d_{I 14.1}, d_{I 14.2} und d_{I 14.3} ist dabei kleiner als der Durchmesser der Anordnung des Hülsenelementes 7 d₇. Das Hülsenelement 7 umfaßt vorzugsweise einen kreisrunden Innendurchmesser d_{I7}, welcher im montierten Zustand mit einem Führungselement der Getriebebaueinheit mindestens eine Spielpassung bildet. Die reibflächenbildenden Zwischenelemente 5, hier 5.1 und 5.2, sind in Figur 1 als Innenlamellen 15.1 und 15.2 ausgebildet. Deren Außendurchmesser d_{A 15.1}, d_{A 15.2} ist dabei kleiner als die in radialer Richtung innere Abmessung des Hülsenelementes 7. Die Spannvorrichtung 9 erzeugt zur Schaffung der montierbaren Lamellenpaketeinheit 1 eine Kraft auf die Lamellen, welche eine Haftreibung zwischen den reibflächenbildenden Elementen 4.1 bis 4.3 und den Zwischenelementen 5.1 und 5.2 ermöglicht. Dies bedeutet, daß die Zwischenelemente 5.1 und 5.2, welche hier als Innenlamellen 5.1 und 5.2 ausgebildet sind, in der montierbaren Lamellenpaketeinheit 1 lediglich durch die mittels der Spannvorrichtung 9 erzeugte Kraft von den reibflächenbildenden Elementen, hier den Außenlamellen 14.1 bis 14.3, geführt und gehalten werden, d. h. geklemmt werden. Die in der Figur 1 dargestellte montierbare Lamellenpaketeinheit 1 kann als komplett vormontierte Baueinheit angeboten und gehandelt werden sowie in einer Getriebebaueinheit auf Führungselemente montiert werden. Die aufwendige Auffädelei einzelner Elemente bei der Montage der Getriebebaueinheit entfällt.

Bei der Ausführung gemäß Figur 1 sind die Innenlamellen 15.1 und 15.2 mit ihrem Innendurchmesser d_{I 15.1 bis 15.2} derart ausgeführt, daß diese formschlüssig mit einem rotierenden Bauelement der Getriebebaueinheit, beispielsweise einer Welle, verbindbar sind. Vorzugsweise weisen diese an ihrem Innendurchmesser eine Profilierung auf. Dies wird in Figur 1b in einer Ansicht von rechts gemäß Figur 1a ohne Spannvorrichtung 9 verdeutlicht. Ferner ist erkennbar, daß vorzugsweise wenigstens vier Hülsenelemente 7, hier dargestellt 7 und 7.1 und 7.2 vorgesehen sind, welche in Umfangsrichtung auf einem gemeinsamen Durchmesser d₇ angeordnet sind und gleiche Abstände zueinander in Umfangsrichtung aufweisen. Die Anzahl der Hülsenelemente 7 richtet sich dabei nach der Anzahl der vorgesehenen Führungselemente in der Getriebebaueinheit. Diese beträgt vorzugsweise zwischen wenigstens 2 und einer Anzahl gleich oder kleiner der Anzahl der Führungselemente. Dies gilt auch für die Ausführung der Innenkontur 16 des Hülsenelementes 7 sowie deren Abmessungen.

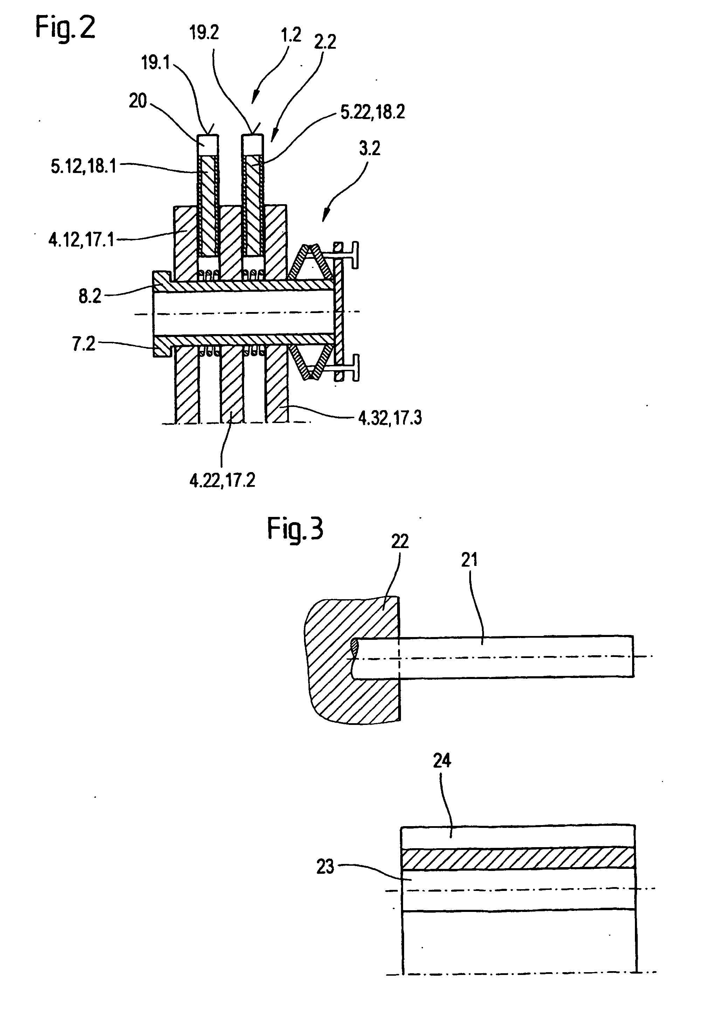

Die Figur 2 verdeutlicht eine weitere Ausführung einer montierbaren Lamellenpaketeinheit 1.2 mit einem vorgespannten Lamellenpaket 2.2, einer Montagehilfsvorrichtung 3.2, wobei der Aufbau der Montagehilfsvorrichtung 3.2 im wesentlichen dem in Figur 1 entspricht, weshalb auf diesen nicht weiter eingegangen wird und für gleiche Elemente die gleichen Bezugszeichen verwendet werden. Die reibflächenbildenden Elemente 4.12 bis 4.32 sind hier als Innenlamellen 17.1 bis 17.3 ausgebildet, während die reibflächenbildenden Zwischenelemente 5.12 bis 5.22 als Außenlamellen 18.1 bis 18.2 ausgebildet sind. Die Außenlamellen 18.1 bis 18.2, welche beim Einsatz in Lamellenbremsen ortsfest im Gehäuse integriert sind, sind in ihrem Außenumfang 19.1 bis 19.2 derart ausgebildet, daß diese formschlüssige Mitnahmeelemente in Form einer Profilierung 20 umfassen, welche der radialen Fixierung der Außenlamellen 18.1 und 18.2 in einem Getriebegehäuse mit entsprechenden Ausnehmungen dienen.

Die Innenlamellen 17.1 und 17.3 sind hier auf einem Hülsenelement 7.2 geführt, welches ebenfalls ein Anschlagselement 8.2 aufweist und mit welchem eine Spannvorrichtung 9.2 verbindbar ist. Bei dieser Ausführung erfolgt die Führung der Innenlamellen 17.1 bis 17.3 in einer Getriebebaueinheit an einem drehfest mit einem rotierenden Bauelement gekoppelten Führungselement.

Die Montage der Lamellen zu Lamellenpaketeinheiten 1 bzw. 1.2 erfolgt dabei beispielsweise wie nachfolgend beschrieben:
1. Ausrichtung der Hülsenelemente 7.1, 7.2 in horizontaler oder vertikaler Richtung, vorzugsweise über eine entsprechende Haltevorrichtung einer Montagevorrichtung
2. Auffädeln der einzelnen Elemente des Lamellenpaketes 2 bzw. 2.2 in Richtung des Anschlages, beginnend mit einem reibflächenbildenden Element im Wechsel mit einem Zwischenelement und eventuell vorgesehene Federeinrichtungen zwischen den reibflächenbildenden Elementen, wobei die Zwischenelemente an einer Hilfsführung einer Montagevorrichtung in radialer Richtung ausgerichtet werden
3. Verbindung der Spannvorrichtung 9 bzw. 9.2 mit dem Hülsenelement 7 bzw. 7.2
4. Verspannung der einzelnen reibflächenbildenden Elemente und der Zwischenelemente gegeneinander, wobei der Zustand der Haftreibung zwischen diesen herbeigeführt wird.
5. Entfemen der Lamellenpaketeinheit von der Montagevorrichtung.

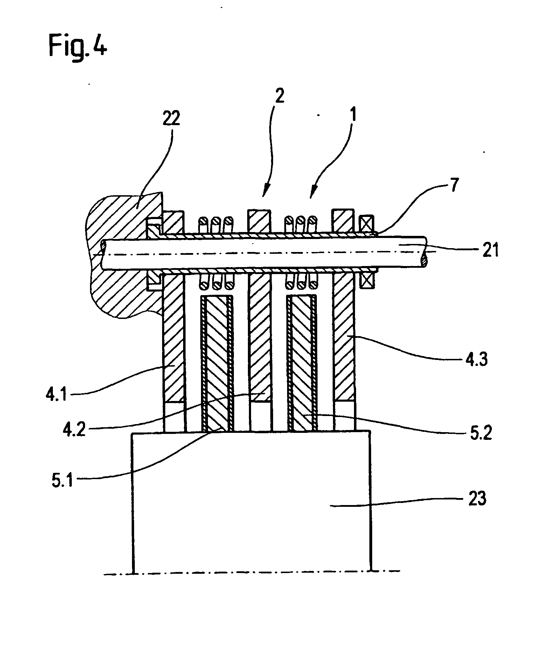

Die in den Figuren 1 und 2 dargestellte montierbare Lamellenpaketeinheit 1 bzw. 1.2 kann auf ein, im Gehäuse oder für Ausführungen gemäß Figur 2 mit einem rotierenden Bauelement drehfest gekoppelten Element geführten Führungselement 21, gelagert werden. Dieses Führungselement 21 ist in Figur 3a schematisch dargestellt und im Gehäuse 22 gelagert. Beim Führungselement diesem handelt es sich vorzugsweise um ein Stangenelement. Für eine Ausführung gemäß Figur 1 der montierbaren Lamellenpaketeinheit ist das Führungselement 21 ortsfest, vorzugsweise im Gehäuse einer Getriebebaueinheit, gelagert. Als weitere Einbausituation ist ein Hohlrad 23 vorgesehen, welches an seinem Außendurchmesser ein Zahnprofil 24 aufweist, welches formschlüssig mit den Ausnehmungen und Vorsprüngen am Innendurchmesser d_{I15.1} bzw. d_{I15.2} der Innenlamellen in Wirkverbindung bringbar ist. Diese beiden Elemente stellen eine mögliche Einbausituation dar, die jedoch auch abgewandelt werden kann. Die montierbare Baueinheit wird dabei auf das Führungselement 21 als komplette vormontierte Einheit aufgezogen, wobei die montierbare Lamellenpaketeinheit 1 bei der Montage zweifach geführt ist, zum einen über das Führungselement 21 und das Hülsenelement 7 sowie die als Innenlamellen 14.1 bis 14.2 fungierenden Zwischenelemente 5.1 und 5.2 im Bereich ihres Innendurchmessers d_{I 15.1 bis 15.2} am Hohlrad 23. Erst nach der Montage und der axialen Fixierung im Bereich des Anschlagselementes 8 des Hülsenelementes 7 erfolgt das Lösen der Spannvorrichtung 9, wobei die einzelnen Außenlamellen 14.1 bis 14.3 auf dem Führungselement 7 geführt bleiben. Die Figur 4 verdeutlicht demgegenüber den Einbauzustand, wobei ersichtlich ist, daß die einzelnen Lamellen - Innen- und Außenlamellen - im unbelasteten Zustand einen berührungsfreien Zustand zueinander einnehmen.

Bei dem Führungselement 21 kann es sich dabei um ein stab- oder rohrförmiges Element beliebigen Querschnitts handeln, welches sich über Teil der axialen Erstreckung der Getriebebaueinheit oder über die gesamte Baulänge erstreckt. Im letztgenannten Fall erfolgt beim Aufbau der Getriebebaueinheit für die einzelnen Bremseinrichtungen ein Nacheinanderaufziehen von Lamellenpaketeinheiten 1 auf die Führungselemente.

### Bezugszeichenliste

- 1; 1.2: montierbare Lamellenpaketeinheit
- 2; 2.2: vorgespanntes Lamellenpaket
- 3; 3.2: Montagehilfsvorrichtung
- 4; 4.1, 4.2, 4.3; 4.12, 4.22, 4.32: reibflächenbildenden Elemente
- 5.1, 5.2; 5.12, 5.22: reibflächenbildenden Zwischenelement
- 6.1, 6.2: Federeinrichtung
- 7.1, 7.2: Hülsenelement
- 8.1, 8.2: Anschlagselement
- 9; 9.2: Spannvorrichtung
- 10: Abstützelement
- 11: Einstellelement
- 12: Kraftaufbringungseinrichtung
- 13: Tellerfeder
- 14.1, 14.2, 14.3: Außenlamellen
- 15.1, 15.2: Innenlamellen
- 16: Innenkontur
- 17.1, 17.2, 17.3: Innenlamellen
- 18.1, 18.2, 18.3: Außenlamellen
- 19.1, 19.2: Außenumfang
- 20: Profilierung
- 21: Führungselement
- 22: Gehäuse
- 23: Hohlrad
- 24: Profil
- a: Federweg
- d_{I 14.1, 14.2, 14.3}: Innendurchmesser der Außenlamellen
- d_{A 15.1, 15.2}: Außendurchmesser der Innenlamellen
- dₑ₇: Durchmesser der radial inneren Erstreckung des Hülsenelementes
- d₇: Durchmesser, auf welchem das Hülsenelement angeordnet ist

## Patentansprüche

1. Montierbare Lamellenpaketeinheit (1; 1.2)
mit einem vorgespannten Lamellenpaket (2; 2.2) zur Montage in einer Getriebebaueinheit auf Führungselementen, umfassend wenigstens zwei einander benachbart angeordnete reibflächenbildende Elemente (4.1, 4.2, 4.3; 4.12, 4.22, 4.32), die über ein reibflächenbildendens Zwischenelement (5.1, 5.2; 5.12, 5.22) reibschlüssig miteinander koppelbar sind und einer Montagehilfsvorrichtung (3; 3.2);
mit wenigstens einer Federeinrichtung (6.1, 6.2) zwischen wenigstens zwei einander benachbart angeordneten reibflächenbildenden Elementen (4.1, 4.2, 4.3; 4.12, 4.22, 4.32);
die Montagehilfsvorrichtung (3; 3.2) umfaßt wenigstens ein auf ein Führungselement der Getriebebaueinheit aufziehbares Hülsenelement (7; 7.2) und eine Spannvorrichtung (9; 9.2);
die reibflächenbildenden Elemente (4.1, 4.2, 4.3; 4.12, 4.22, 4.32) sind auf dem Hülsenelement (7; 7.2) geführt;
das Hülsenelement (7; 7.2) umfaßt einen Anschlag (8; 8.2);
die Spannvorrichtung (9; 9.2) ist lösbar mit dem Hülsenelement (7; 7.2) verbindbar und erzeugt zur Vorspannung des Lamellenpaketes (2; 2.2) eine Kraft, so daß zwischen den reibflächenbildenden Elementen (4.1, 4.2, 4.3; 4.12, 4.22, 4.32) und den Zwischenelementen (5.1, 5.2; 5.12, 5.22) Haftreibung erzeugt wird.

2. Montierbare Lamellenpaketeinheit (1; 1.2) nach Anspruch 1, **dadurch gekennzeichnet, daß** die reibflächenbüdenden Zwischenelemente (5.1, 5.2; 5.12, 5.22) frei von einem Führungselement sind.

3. Montierbare Lamellenpaketeinheit (1; 1.2) nach einem der Ansprüche 1 oder 2, **gekennzeichnet durch** die folgenden Merkmale:
die reibflächenbildenden Elemente (4.1, 4.2, 4.3) sind als Außenlamellen (14.1, 14.2, 14.3) ausgeführt;
die reibflächenbildenden Zwischenelemente (5.1, 5.2) sind als Innentamellen (15.1, 15.2) ausgeführt.

4. Montierbare Lamellenpaketeinheit (1.2) nach einem der Ansprüche 1 oder 2, **gekennzeichnet durch** die folgenden Merkmale:
die reibflächenbildenden Elemente (4.12, 4.22, 4.32) sind als Innenlamellen (17.1, 17.2, 17.3) ausgeführt;
die reibflächenbildenden.Zwischenelemente (5.12, 5.22) sind als Außenlamellen (18.1, 18.2) ausgeführt.

5. Montierbare Lainellenpaketeinheit (1.2) nach Anspruch 4, **dadurch gekennzeichnet, daß** die Außenlamellen (18.1, 18.2) im Bereich ihres Außendurchmessers eine Profilierung (20) zur Realisierung einer formflüssigen Verbindung aufweisen.

6. Montierbare Lamellenpaketeinheit (1; 1.2) nach einem der Ansprüche 1 bis 5, **dadurch gekennzeichnet, daß** die Spannvorrichtung (9; 9.2) dem Lamellenpaket (2; 2.2) auf der vom Anschlag (7; 7.2) weggerichteten Seite zugeordnet ist.

7. Montierbare Lamellenpaketeinheit (1; 1.2) nach einem der Ansprüche 1 bis 6,
**gekennzeichnet durch** die folgenden Merkmale:
die Spannvorrichtung (9; 9.2) umfaßt ein Abstützelement (10), welches lösbar mit dem Hülsenelement (7; 7.2) verbindbar ist;
die Spannvorrichtung (9; 9.2) umfaßt ferner ein Einstellelement (11) und
eine Kraftaufbringungseinrichtung (12), welche wenigstens mittelbar an dem äußersten und am weitesten vom Anschlag (8) entfernt angeordneten reibflächenbildenden Element des Lamellenpaketes (2; 2.2) in Wirkverbindung bringbar ist.

8. Montierbare Lamellenpaketeinheit (1; 1.2) nach Anspruch 7, **dadurch gekennzeichnet, daß** Einstellelement (11) und Kraftaufbringungseinrichtung (12) von einem Element gebildet werden.

9. Montierbare Lamellenpaketeinheit (1; 1.2) nach Anspruch 7 oder 8, **dadurch gekennzeichnet, daß** die Kraftaufbringungseinrichtung (12) ein nach außen wirkende Tellerfeder (13) umfaßt.

10. Montierbare Lamellenpaketeinheit (1; 1.2) nach einem der Ansprüche 7 bis 9, **dadurch gekennzeichnet, daß** die Kraftaufbringungseinrichtung (12) eine Stellmutter umfaßt, welche mit einem, auf dem Hülsenelement angeordneten Gewinde zusammenwirkt.

11. Montierbare Lamellenpaketeinheit (1; 1.2) nach einem der Ansprüche 7 bis 10, **dadurch gekennzeichnet, daß** das Einstellelement von einer Stellmutter gebildet wird.

12. Montierbare Lamellenpaketeinheit (1; 1.2) nach einem der Ansprüche 7 oder 8, **dadurch gekennzeichnet, daß** die Kraftaufbringungseinrichtung (12) und das Einstellelement (11) von einem Klemmring gebildet werden.

13. Montierbare Lamellenpaketeinheit (1; 1.2) nach einem der Ansprüche 1 bis 12, **dadurch gekennzeichnet, daß** das Hülsenelement (7; 7.2) und der Anschlag (8; 8.2) als einteilige Baueinheit ausgeführt sind.

14. Montierbare Lamellenpaketeinheit (1; 1.2) nach einem der Ansprüche 1 bis 13, **gekennzeichnet durch** die folgenden Merkmale:
es sind eine Vielzahl von reibflächenbildenden Elementen (4.1, 4.2, 4.3; 4.12, 4.22, 4.32) vorgesehen;
wenigstens zwischen den in Kraftflußrichtung ersten beiden einander benachbarten reibflächenbildenden Elementen (4.1, 4.2; 4.12, 4.22) ist eine Federeinrichtung (6.1) vorgesehen.

15. Montierbare Lamellenpaketeinheit (1; 1.2) nach Anspruch 14, **dadurch gekennzeichnet, daß** die Federeinrichtung (6.1, 6.2) wenigstens eine Feder mit einer Kennliniencharakteristik eines im wesentlichen konstanten Kraftverlaufes über einen bestimmten Federweg aufweist.

16. Montierbare Lamellenpaketeinheit (1; 1.2) nach Anspruch 14 oder 15, **dadurch gekennzeichnet, daß** die Federeinheit als Wellenfederring oder Kegelfeder oder Schraubenfeder ausgeführt ist.

17. Montierbare Lamellenpaketeinheit (1; 1.2) nach einem der Ansprüche 1 bis 16, **dadurch gekennzeichnet, daß** das Hülsenelement (7; 7.2) einen im wesentlichen kreisringförmigen Querschnitt aufweist.

18. Montierbare Lamellenpaketeinheit (1; 1.2) nach einem der Ansprüche 1 bis 17, **dadurch gekennzeichnet, daß** die Abmessung des einzelnen Hülsenelementes (7; 7.2) in axialer Richtung wenigstens der Abmessung der hintereinander angeordneten reibflächenbildenden Elementen und Zwischenelementen im entlasteten Zustand entspricht.

19. Montierbare Lamellenpaketeinheit (1; 1.2) nach einem der Ansprüche 1 bis 18, **dadurch gekennzeichnet, daß** die Montagehilfsvorrichtung (3; 3.2) eine Mehrzahl von Hütsenelementen (7; 7.1, 7.2) umfaßt.

20. Montierbare Lamellenpaketeinheit (1; 1.2) nach Anspruch 19, **dadurch gekennzeichnet, daß** die Hülsenelemente auf einem gemeinsamen Durchmesser der reibflächenbildenden Elemente mit gleichem Abstand in Umfangsrichtung zueinander angeordnet sind.

21. Montierbare Lamellenpaketeinheit (1; 1.2) nach einem der Ansprüche 19 oder 20, **dadurch gekennzeichnet, daß** jedem Hülsenelement (7; 7.2) eine Spannvorrichtung zugeordnet ist.

22. Verfahren zur Montage einer montierbaren Lameitenpaketeinheit (1; 1.2) gemäß einem der Ansprüche 1 bis 19 mit einer Führungseinrichtung **gekennzeichnet durch** die folgenden Merkmale:
eine Hilfseinrichtung zur Justierung der Zwischenelemente und die Montagehilfsvorrichtung werden in ihrer Lage zueinander örtlich fixiert; ein erstes reibflächenbildendes Element (4.1, 4.2, 4.3; 4.22, 4.32) wird auf wenigstens zwei Hülsenelemente (7; 7.2) aufgesteckt und danach ein erstes reibflächenbildendes Zwischenelement (5.1, 5.2; 5.12, 5.22) auf das Führungselement;
die weiteren reibflächenbildenden Elemente (4.1, 4.2, 4.3; 4.22, 4.32) und die reibflächenbildenden Zwischenelemente (5.1, 5.2; 5.12, 5.22) werden wechselweise auf das Hülsenelement (7; 7.2) und die Hilfsvorrichtung aufgesteckt;
die Spannvorrichtung (9, 9.2) wird mit dem Hülsenelement (7; 7.2) verbunden und zur Verspannung der einzelnen reibflächenbildenden Elemente und der Zwischenelemente gegeneinander aktiviert, wobei der Zustand der Haftreibung zwischen diesen herbeigeführt wird.

23. Verfahren zur Montage von Lamellenkupplungs- oder - bremseinrichtungen in einer Getriebebaueinheit, wobei wenigstens ein Teil der Lamellen an einem Führungselement führbar ist;
bei welchem eine montierbare Lamellenpaketeinheit (1; 1.2) nach einem der Ansprüche 1 bis 21 auf das Führungselement aufgezogen wird und die reibflächentragenden Zwischenelemente an einem weiteren Element geführt werden;
bei welchem nach Aufziehen der montierbaren Lamellenpaketeinheit (1; 1.2) die Spannvorrichtung (9; 9.2) gelöst und entfernt wird und das Lamellenpaket (2; 2.2) in axialer Richtung gesichert wird.

24. Verwendung einer montierbaren Lamellenpaketeinheit (1; 1.2) nach einem der Ansprüche 1 bis 21 in einer Kupplung.

25. Verwendung einer montierbaren Lamellenpaketeinheit (1; 1.2) nach einem der Ansprüche 1 bis 21 in einer Lamellenbremseinrichtung.

## Claims

1. Mountable disk assembly unit (1; 1.2) with a pre-tensioned disk assembly (2; 2.2) for mounting in a transmission module on guide elements, comprising at least two elements (4.1, 4.2, 4.3; 4.12, 4.22, 4.32) which are arranged adjacent to one another, form friction faces and can be coupled in a frictionally engaged manner with each other by way of an intermediate element (5.1, 5.2; 5.12, 5.22) forming friction faces, and an auxiliary mounting apparatus (3; 3.2), comprising at least one spring device (6.1, 6.2) between at least two elements (4.1, 4.2, 4.3; 4.12, 4.22, 4.32) which are arranged adjacent to one another and form friction faces;
with the auxiliary mounting apparatus (3; 3.2) comprising at least one sleeve element (7; 7.2) mountable on a guide element of the transmission module and a tensioning unit (9; 9.2);
with the elements (4.1, 4.2, 4.3; 4.12, 4.22, 4.32) forming the friction faces being guided on the sleeve element (7; 7.2);
with the sleeve element (7; 7.2) comprising a stop (8; 8.2);
with the tensioning apparatus (9;9.2) being detachably connectable with the sleeve element (7; 7.2) and thus producing a force for pretensioning the disk assembly (2; 2.2), so that static friction is produced between the elements (4.1, 4.2, 4.3; 4.12, 4.22, 4.32) forming friction faces and the intermediate elements (5.1; 5.2; 5.12, 5.22).

2. A mountable disk assembly unit (1; 1.2) according to claim 1, **characterized in that** the intermediate elements (5.1, 5.2; 5.12, 5.22) forming friction faces are free from any guide element.

3. A mountable disk assembly unit (1; 1.2) according to one of the claims 1 or 2, **characterized by** the following features:
the elements (4.1, 4.2, 4.3) forming friction faces are configured as outside disks (14.1, 14.2, 14.3);
the intermediate elements (5.1, 5.2) forming friction faces are configured as inside disks (15.1, 15.2).

4. A mountable disk assembly unit (1.2) according to one of the claims 1 or 2, **characterized by** the following features:
the elements (4.12, 4.22, 4.32) forming friction faces are configured as inside disks (17.1, 17.2, 17.3);
the intermediate elements (5.12, 5.22) are configured as outside disks (18.1, 18.2).

5. A mountable disk assembly unit (1.2) according to claim 4, **characterized in that** the outside disks (18.1, 18.2) have a profiling (20) for realizing a connection in the region of its outside diameter.

6. A mountable disk assembly unit (1; 1.2) according to one of the claims 1 to 5, **characterized in that** the tensioning apparatus (9; 9.2) is associated with the disk assembly (2; 2.2) on the side averted from the stop (7; 7.2).

7. A mountable disk assembly unit (1; 1.2) according to one of the claims 1 to 6, **characterized by** the following features:
the tensioning apparatus (9; 9.2) comprises a supporting element (10) which can be connected in a detachable way with the sleeve element (7; 7.2);
the tensioning apparatus (9; 9.2) further comprises a setting element (11) and a force generating device (12) which can be brought in operative connection at least indirectly to the outermost element of the disk assembly (2; 2.2) forming friction faces, which element is farthest from the stop (8).

8. A mountable disk assembly unit (1; 1.2) according to claim 7, **characterized in that** the adjusting element (11) and the force generating device (12) are formed by one element.

9. A mountable disk assembly unit (1; 1.2) according to claim 7 or 8, **characterized in that** the force generating device (12) comprises an outwardly acting disk spring (13).

10. A mountable disk assembly unit (1; 1.2) according to one of the claims 7 to 9, **characterized in that** the force generating device (12) comprises an adjusting nut which cooperates with a thread arranged on the sleeve element.

11. A mountable disk assembly unit (1; 1.2) according to one of the claims 7 to 10, **characterized in that** the adjusting element is formed by an adjusting nut.

12. A mountable disk assembly unit (1; 1.2) according to one of the claims 7 or 8, **characterized in that** the force generating device (12) and the adjusting element (11) are formed by a clamping ring.

13. A mountable disk assembly unit (1; 1.2) according to one of the claims 1 to 12, **characterized in that** the sleeve element (7; 7.2) and the stop (8; 8.2) are configured as an integral module.

14. A mountable disk assembly unit (1; 1.2) according to one of the claims 1 to 13, **characterized by** the following features:
a plurality of elements (4.1, 4.2, 4.3; 4.12, 4.22, 4.32) forming friction faces are provided;
a spring device (6.1) is provided at least between the mutually adjacent elements (4.1, 4.2; 4.12, 4.22) forming friction faces and being the first two in the direction of the power flow.

15. A mountable disk assembly unit (1; 1.2) according to claim 14, **characterized in that** the spring device (6.1, 6.2) comprises at least one spring with a characteristic of a substantially constant force progression over a specific travel of spring.

16. A mountable disk assembly unit (1; 1.2) according to claim 14 or 15, **characterized in that** the spring unit is configured as sinuous lock washer or conical wire spring or coil spring.

17. A mountable disk assembly unit (1; 1.2) according to one of the claims 1 to 16, **characterized in that** the sleeve element (7; 7.2) has a substantially annulus-like cross section.

18. A mountable disk assembly unit (1; 1.2) according to one of the claims 1 to 17, **characterized in that** the dimension of the individual sleeve element (7; 7.2) in the axial direction corresponds at least to the dimension of the successively arranged and friction-face-forming elements and the intermediate elements in the unloaded state.

19. A mountable disk assembly unit (1; 1.2) according to one of the claims 1 to 18, **characterized in that** the auxiliary mounting apparatus (3; 3.2) comprises a plurality of sleeve elements (7; 7.1; 7.2).

20. A mountable disk assembly unit (1; 1.2) according to claim 19, **characterized in that** the sleeve elements are arranged on a common diameter of the friction-face-forming elements at the same distance from each other in the circumferential direction.

21. A mountable disk assembly unit (1; 1.2) according to one of the claims 19 or 20, **characterized in that** each sleeve element (7; 7.2) is associated with a tensioning apparatus.

22. A method for mounting a mountable disk assembly unit (1; 1.2) according to one of the claims 1 to 19a guide device **characterized by** the following features:
an auxiliary device for adjusting the intermediate elements and the auxiliary mounting apparatus are fixed locally in their position relative to each other; a first friction-face-forming element (4.1, 4.2, 4.3; 4.22, 4.32) is inserted into at least two sleeve elements (7; 7.2) and thereafter a first friction-face-forming intermediate element (5.1, 5.2, 5.3; 5.22, 5.32) on the guide element;
the further friction-face-forming elements (4.1, 4.2, 4.3; 4.22, 4.32) and the friction-face-forming intermediate element (5.1, 5.2, 5.3; 5.22, 5.32) are inserted in an alternating manner on the sleeve element (7; 7.2) and the auxiliary apparatus;
the tensioning apparatus (9, 9.2) is joined to the sleeve element (7; 7.2) and is activated for tensioning the individual friction-face-forming elements and the intermediate elements relative to each other, with the state of static friction being produced between the same.

23. A method for mounting multiple-disk clutch or braking devices in a transmission module, with at least a part of the disks being guidable on a guide element;
in which a mountable disk assembly unit (1; 1.2) according to one of the claims 1 to 21 is mounted on the guide element and the friction-face-bearing intermediate elements are guided on a further element;
in which after the mounting of the mountable disk assembly unit (1; 1.2) the tensioning apparatus (9; 9.2) is loosened and removed and the disk assembly (2; 2.2) is secured in the axial direction.

24. The use of a mountable disk assembly unit (1; 1.2) according to one of the claims 1 to 21 in a clutch.

25. The use of a mountable disk assembly unit (1; 1.2) according to one of the claims 1 to 21 in a multi-disk brake device.

## Revendications

1. Groupe d'empilage disques (1 ; 1.2) montable
avec un empilage disques (2 ; 2.2) précontraint destiné à être monté dans un système d'engrenage sur des éléments de guidage, comportant au moins deux éléments formant des surfaces de frottement (4.1, 4.2, 4.3 ; 4.12, 4.22, 4.32) disposés au voisinage l'un de l'autre et adaptés pour être couplés ensemble par une liaison par friction par le biais d'un élément intermédiaire (5.1, 5.2 ; 5.12, 5.22) formant une surface de frottement et avec un dispositif auxiliaire de montage (3 ; 3.2) ;
avec au moins un système ressort (6.1, 6.2) prévu entre au moins deux éléments formant des surfaces de frottement (4.1, 4.2, 4.3 ; 4.12, 4.22, 4.32) disposés au voisinage l'un de l'autre ;
le dispositif auxiliaire de montage (3 ; 3.2) comprend au moins un élément manchon (7 ; 7.2) adapté pour être enfilé sur un élément de guidage du système d'engrenage et un dispositif de précontrainte (9 ; 9.2) ;
les éléments formant des surfaces de frottement (4.1, 4.2, 4.3 ; 4.12, 4.22, 4.32) sont guidés sur l'élément manchon (7 ; 7.2) ;
l'élément manchon (7 ; 7.2) comprend une butée (8 ; 8.2) ;
le dispositif de précontrainte (9 ; 9.2) est adapté pour être relié de façon amovible à l'élément manchon (7 ; 7.2) et génère une force destinée à maintenir en précontrainte l'empilage disques (2 ; 2.2) de sorte qu'un frottement statique est généré entre les éléments formant des surfaces de frottement (4.1, 4.2, 4.3 ; 4.12, 4.22, 4.32) et les éléments intermédiaires (5.1, 5.2 ; 5.12, 5.22).

2. Groupe d'empilage disques (1 ; 1.2) montable selon la revendication 1, **caractérisé en ce que** les éléments intermédiaires (5.1, 5.2 ; 5.12, 5.22) formant des surfaces de frottement sont dépourvus d'élément de guidage.

3. Groupe d'empilage disques (1 ; 1.2) montable selon l'une quelconque des revendications 1 ou 2, **caractérisé par** les particularités suivantes :
les éléments formant des surfaces de frottement (4.1, 4.2, 4.3) sont conformés en forme de disques extérieurs (14.1, 14.2, 14.3) ;
les éléments intermédiaires (5.1, 5.2) formant des surfaces de frottement sont conformés en forme de disques intérieurs (15.1, 15.2).

4. Groupe d'empilage disques (1 ; 1.2) montable selon l'une quelconque des revendications 1 ou 2, **caractérisé par** les particularités suivantes :
les éléments formant des surfaces de frottement (4.12, 4.22, 4.32) sont conformés en forme de disques intérieurs (17.1, 17.2, 17.3) ;
les éléments intermédiaires (5.12, 5.22) formant des surfaces de frottement sont conformés en forme de disques extérieurs (18.1, 18.2).

5. Groupe d'empilage disques (1.2) montable selon la revendication 4, **caractérisé en ce que** les disques extérieurs (18.1, 18.2) comportent à la hauteur de leur diamètre extérieur un relief (20) destiné à réaliser une liaison à coopération de formes.

6. Groupe d'empilage disques (1 ; 1.2) montable selon l'une quelconque des revendications 1 à 5, **caractérisé en ce que** le dispositif de précontrainte (9 ; 9.2) est associé à l'empilage disques (2 ; 2.2) sur le côté détourné de la butée (7 ; 7.2).

7. Groupe d'empilage disques (1 ; 1.2) montable selon l'une quelconque des revendications 1 à 6,
**caractérisé par** les particularités suivantes :
le dispositif de précontrainte (9 ; 9.2) comprend un élément support (10) adapté pour être relié de façon amovible à l'élément manchon (7 ; 7.2) ;
le dispositif de précontrainte (9 ; 9.2) comprend par ailleurs un élément de réglage (11) et un mécanisme d'application de force (12) adapté pour, du moins indirectement, être relié à, et coopérer avec, l'élément formant surface de frottement de l'empilage disques (2 ; 2.2) disposé le plus à l'extérieur et le plus éloigné de la butée (8).

8. Groupe d'empilage disques (1 ; 1.2) montable selon la revendication 7, **caractérisé en ce que** l'élément de réglage (11) et le mécanisme d'application de force (12) forment un même élément.

9. Groupe d'empilage disques (1 ; 1.2) montable selon la revendication 7 ou 8, **caractérisé en ce que** le mécanisme d'application de force (12) comprend une rondelle Belleville (13) agissant vers l'extérieur.

10. Groupe d'empilage disques (1 ; 1.2) montable selon l'une quelconque des revendications 7 à 9, **caractérisé en ce que** le mécanisme d'application de force (12) comprend un écrou de réglage qui coopère avec un filetage disposé sur l'élément manchon.

11. Groupe d'empilage disques (1 ; 1.2) montable selon l'une quelconque des revendications 7 à 10, **caractérisé en ce que** l'élément de réglage est formé par un écrou de réglage.

12. Groupe d'empilage disques (1 ; 1.2) montable selon l'une quelconque des revendications 7 ou 8, **caractérisé en ce que** le mécanisme d'application de force (12) et l'élément de réglage (11) sont formés par une bague de serrage.

13. Groupe d'empilage disques (1 ; 1.2) montable selon l'une quelconque des revendications 1 à 12, **caractérisé en ce que** l'élément manchon (7 ; 7.2) et la butée (8 ; 8.2) sont réalisés d'un seul tenant.

14. Groupe d'empilage disques (1 ; 1.2) montable selon l'une quelconque des revendications 1 à 13, **caractérisé par** les particularités suivantes :
une pluralité d'éléments formant des surfaces de frottement (4.1, 4.2, 4.3 ; 4.12, 4.22, 4.32) sont prévus ;
un système ressort (6.1) est prévu au moins entre les, vus dans la direction du flux des forces, premiers deux éléments formant des surfaces de frottement (4.1, 4.2 ; 4.12, 4.22) voisins.

15. Groupe d'empilage disques (1 ; 1.2) montable selon la revendication 14, **caractérisé en ce que** le système ressort (6.1, 6.2) comporte au moins un ressort possédant la caractéristique d'une raideur sensiblement constante sur un trajet déterminé du ressort.

16. Groupe d'empilage disques (1 ; 1.2) montable selon la revendication 14 ou 15, **caractérisé en ce que** l'unité ressort est réalisée sous forme de rondelle élastique ondulée ou de ressort conique ou de ressort hélicoïdal.

17. Groupe d'empilage disques (1 ; 1.2) montable selon l'une quelconque des revendications 1 à 16, **caractérisé en ce que** l'élément manchon (7 ; 7.2) est de section sensiblement circulaire.

18. Groupe d'empilage disques (1 ; 1.2) montable selon l'une quelconque des revendications 1 à 17, **caractérisé en ce que**, à l'état non sollicité, les dimensions suivant la direction axiale d'un seul élément manchon (7 ; 7.2) correspondent du moins aux dimensions des éléments et éléments intermédiaires formant des surfaces de frottement disposés les uns derrière les autres.

19. Groupe d'empilage disques (1 ; 1.2) montable selon l'une quelconque des revendications 1 à 18, **caractérisé en ce que** le dispositif auxiliaire de montage (3 ; 3.2) comprend une multitude d'éléments manchon (7 ; 7.1, 7.2).

20. Groupe d'empilage disques (1 ; 1.2) montable selon la revendication 19, **caractérisé en ce que** les éléments manchon sont disposés à égale distance les uns des autres suivant la direction circonférentielle sur un diamètre commun des éléments formant des surfaces de frottement.

21. Groupe d'empilage disques (1 ; 1.2) montable selon la revendication 19 ou 20, **caractérisé en ce qu'**à chaque élément manchon (7 ; 7.2) est associé un dispositif de précontrainte.

22. Procédé de montage d'un groupe d'empilage disques (1 ; 1.2) selon l'une quelconque des revendications 1 à 19 avec un système de guidage **caractérisé par** les particularités suivantes :
on fixe en place un système auxiliaire destiné à ajuster les éléments intermédiaires et le dispositif auxiliaire de montage dans leur position l'un par rapport à l'autre ;
on coiffe au moins deux éléments manchon (7 ; 7.2) d'un premier élément formant surface de frottement (4.1, 4.2, 4.3 ; 4.22, 4.32) et ensuite l'élément de guidage, d'un premier élément intermédiaire formant surface de frottement (5.1, 5.2 ; 5.12, 5.22) ;
on coiffe l'élément manchon (7 ; 7.2) et le dispositif auxiliaire alternativement des autres éléments formant surface de frottement (4.1, 4.2, 4.3 ; 4.22, 4.32) et des éléments intermédiaires formant surface de frottement (5.1, 5.2 ; 5.12, 5.22) ;
on relie le dispositif de précontrainte (9, 9.2) à l'élément manchon (7 ; 7.2) et on l'active pour serrer les différents éléments et éléments intermédiaires formant surface de frottement les uns contre les autres de manière à réaliser entre eux un état de frottement statique.

23. Procédé de montage de systèmes d'embrayage ou de frein multidisques dans un système d'engrenage, une partie des disques au moins étant adaptée pour être guidée le long d'un élément de guidage ;
selon lequel on enfile sur l'élément de guidage un groupe d'empilage disques (1 ; 1.2) selon l'une quelconque des revendications 1 à 21 et on guide les éléments intermédiaires formant surface de frottement le long d'un autre élément ;
selon lequel, une fois le groupe d'empilage disques (1 ; 1.2) montable enfilé, on désengage et retire le dispositif de précontrainte (9 ; 9.2) et on assure le positionnement des disques empilés (2 ; 2.2) suivant la direction axiale.

24. Utilisation d'un groupe d'empilage disques (1 ; 1.2) montable selon l'une quelconque des revendications 1 à 21 dans un embrayage.

25. Utilisation d'un groupe d'empilage disques (1 ; 1.2) montable selon l'une quelconque des revendications 1 à 21 dans un système de frein multidisques.
